# EUROPEAN PATENT SPECIFICATION

(11) **EP 2 231 426 B1**
(45) Date of publication and mention of the grant of the patent: **11.06.2014**
(21) Application number: 08856922.3
(22) Date of filing: 02.12.2008
(51) Int. Cl.: B60G 3/22, B60G 7/00

(54) **HYBRID ARM FOR AN INDEPENDENT REAR SUSPENSION FOR A MOTOR VEHICLE**
HYBRIDLENKER FÜR DIE HINTERE UNABHÄNGIGE AUFHÄNGUNG FÜR EIN KRAFTFAHRZEUG
BRAS HYBRIDE POUR SUSPENSION ARRIERE INDEPENDANTE DE VEHICULE MOTORISE

(30) Priority: 03.12.2007 IT TO20070872
(43) Date of publication of application: 29.09.2010
(73) Proprietor: Sistemi Sospensioni S.p.A., 20011 Corbetta (MI) (IT)
(72) Inventor: D'APONTE, Armando, I-15100 Alessandria (IT); MONCHIERO, Piero, I-10137 Torino (IT); SANTINI, Andrea, I-10093 Collegno (Torino) (IT)
(74) Representative: Rondano, Davide
(86) International application number: PCT/IB2008/055044
(87) International publication number: WO 2009/072061

(56) References cited:
- EP-A- 0 742 057
- EP-A- 1 184 213
- WO-A-2007/024919
- DE-A1- 4 129 643
- DE-A1-102006 042 376
- GB-A- 2 262 263
- US-A1- 2007 007 741

## Description

The present invention refers to an arm for an independent rear suspension for a motor vehicle.

The arms for independent rear suspensions are currently made of steel, cast iron or aluminium and are generally composed of a plurality of welded pieces which are made of the same material and are obtained by the same manufacturing method, typically by stamping in case of steel, by casting in case of cast iron and by stamping or casting in case of aluminium. Arms wholly made of stamped steel or aluminium ensure high compliance in case of impact, but do not allow to obtain camber stiffness values of the same level as those obtainable with arms wholly made of cast iron or cast aluminium.

An arm for an independent rear suspension for a motor vehicle according to the preamble of independent claims 1 and 2 is known from WO2007/024919. With reference specifically to Figure 5 of this document, the arm illustrated herein comprises a wheel-side portion for support of a wheel and a body-side portion for connection to the vehicle body, wherein the body-side portion is formed by a stamped metal piece and wherein the wheel-side portion and the body-side portion are securely connected to each other by welding.

It is therefore an object of the present invention to provide an arm for an independent rear suspension for a motor vehicle which offers at the same time very high performances both in terms of stiffness and in terms of safety in case of impact and which also has a reduced weight.

This and other objects are fully achieved according to the invention by virtue of an arm for an independent rear suspension for a motor vehicle having the features defined in appended claims 1 and 2.

In short, the invention is based on the idea of providing an arm with a hybrid structure, which comprises a wheel-carrying portion made of cast iron or aluminium and a body connection portion formed by at least one tubular element of steel or aluminium, respectively, obtained by stamping or extrusion.

By virtue of such a hybrid structure it is possible to combine the advantages offered by both the technological solutions (stamping/extrusion and casting): the iron or aluminium casting for the wheel-carrying structure makes it possible to obtain high camber stiffness values, while the use of at least one tubular element of stamped or extruded steel or aluminium for the body connection portion ensures a high compliance in case of impact, with resulting advantages in terms of safety.

Further features and advantages of the invention will result more clearly from the following detailed description, given purely by way of non-limiting example with reference to the appended drawings, in which:

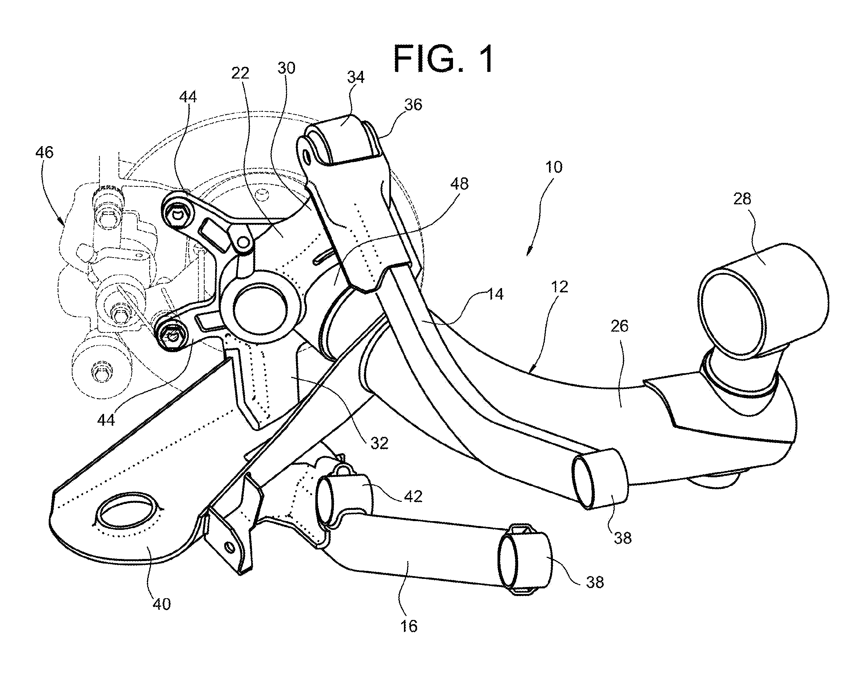

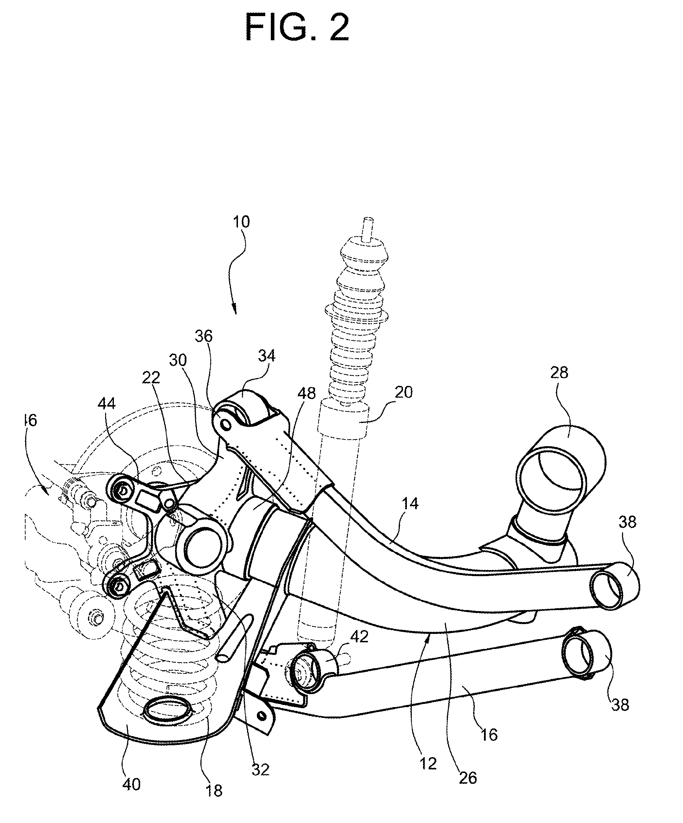

Figures 1 and 2 are perspective views of an independent rear suspension for a motor vehicle having an arm according to a preferred embodiment of the invention; and
Figure 3 is a plan view of the suspension of Figures 1 and 2.

In the description and the claims which follow, terms such as "longitudinal" and "transverse", "inner" and "outer", "front" and "rear", "upper" and "lower" etc. are to be intended as referred to the mounted condition of the suspension on a vehicle.

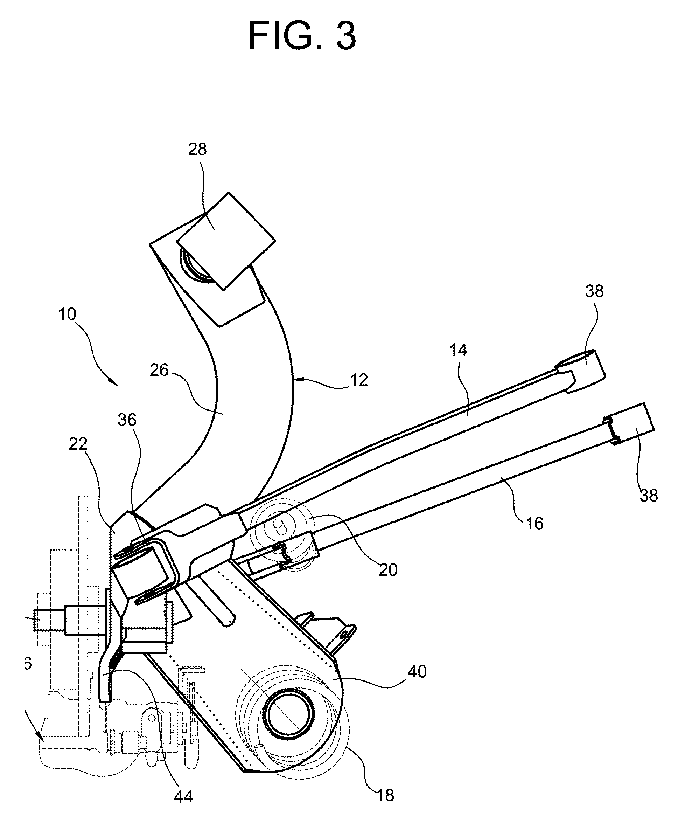

With reference to the drawings, an independent rear suspension for a motor vehicle is generally indicated 10 and comprises an arm 12, in the present case a longitudinal arm, a pair of transverse rods 14 and 16, a spring 18 and a shock-absorber 20. The arm 12 comprises a wheel-side portion 22 provided with a spindle 24 (which can be seen in Figure 3 only) for support of a wheel (not shown) and a body-side portion 26 provided with a bushing seat 28 for articulated connection of the arm 12 to the vehicle body (not shown). The two transverse rods 14 and 16, that is, the upper transverse rod and the lower transverse rod, respectively, are articulately connected at their outer ends to the wheel-side portion 22 of the arm 12 and at their inner ends to the body. More specifically, for connection with the wheel-side portion 22 of the arm 12, that arm portion integrally forms a pair of small arms 30 and 32 which extend upwards and downwards, respectively, and are provided at their free ends with respective bushing seats 34 (of which only the one associated to the upper small arm 30 can be seen), while the rods 14 and 16 are provided at their transversely outer ends with respective fork-like portions 36 for receiving each a respective bushing pins (not shown). On the other hand, for connection with the body the rods 14 and 16 are provided at their transversely inner ends with respective bushing seats 38. The spring 18 rests at its bottom on a plate 40 secured both to the wheel-side portion 22, in particular to the lower small arm 32, and to the body-side portion 26 of the arm 12. The shock-absorber 20 is articulately connected at its lower end to the lower rod 16, and for this purpose the lower rod 16 is provided with a special bushing seat 42. The wheel-side portion 22 of the arm 12 integrally forms also a pair of support brackets 44 for the mounting of a brake caliper 46.

According to a first embodiment of the invention, the wheel-side portion 22 of the arm 12 is integrally made of cast iron, while the body-side arm portion 26 is made as a steel tubular piece. The two arm portions 22 and 26 are firmly secured to each other by welding at a joining tubular portion 48 integrally formed by the body-side arm portion 22. In this case, the spring plate 40 is preferably made as a steel stamped piece and is fixed by welding to the two arm portions 22 and 26.

According to a variant of embodiment of the invention, the wheel-side arm portion is integrally made of cast aluminium, for example gravity die cast aluminium, while the body-side arm portion is made as an extruded piece of aluminium. Also in this case, the two wheel-side and body-side arm portions are firmly secured to each other by welding at a tubular joining portion integrally formed by the body-side arm portion. In this case, the spring plate is preferably made as a stamped piece of aluminium and is fixed by welding to the two arm portions.

Naturally, the principle of the invention remaining unchanged, the embodiments and details of construction may be varied widely with respect to those described and illustrated purely by way of non-limiting example, without thereby departing from the scope of the invention as defined in the appended claims.

For example, although the description and the drawings refer to a longitudinal arm, the invention may be clearly applied to a transverse arm as well.

## Claims

1. Arm (12) for an independent rear suspension for a motor vehicle (10), the arm comprising a wheel-side portion (22) for support of a wheel and a body-side portion (26) for connection to the vehicle body, wherein the wheel-side portion (22) is formed by a single cast metal piece, wherein the body-side portion (26) is formed by at least one stamped or extruded metal piece and wherein the wheel-side portion (22) and the body-side portion (26) are securely connected to each other by welding,
**characterized in that** the wheel-side arm portion (22) is made of cast iron and **in that** the body-side arm portion (26) is made as a steel tubular piece.

2. Arm (12) for an independent rear suspension for a motor vehicle (10), the arm comprising a wheel-side portion (22) for support of a wheel and a body-side portion (26) for connection to the vehicle body, wherein the wheel-side portion (22) is formed by a single cast metal piece, wherein the body-side portion (26) is formed by at least one stamped or extruded metal piece and wherein the wheel-side portion (22) and the body-side portion (26) are securely connected to each other by welding,
**characterized in that** the wheel-side arm portion (22) is made of cast aluminium and **in that** the body-side arm portion (26) is made as an extruded piece of aluminium.

3. Arm according to claim 1 or claim 2, wherein the wheel-side portion (22) is provided with a wheel-carrying spindle (24) and wherein the body-side portion (26) is provided with a bushing seats (28) for articulated connection of the arm (12) to the vehicle body.

4. Arm according to any of the preceding claims, wherein the wheel-side portion (22) integrally forms at least one small arm (30, 32) provided at its free end with a respective bushing seat (34) for articulated connection of the wheel-side portion (22) to at least one further connection member of the suspension.

5. Arm according to any of the preceding claims, wherein the wheel-side portion (22) integrally forms at least one support bracket (44) for support of a brake caliper (46).

6. Independent rear suspension for a motor vehicle (10), comprising an arm (12) according to any of the preceding claims, at least one further connection member (14, 16) articulated on the one hand to the wheel-side portion (22) of the arm (12) and on the other hand to the vehicle body, as well as a spring (18) and a shock-absorber (20).

7. Suspension according to claim 6, wherein the arm (12) is a longitudinal arm and wherein the suspension further comprises, as the at least one further connection member, a pair of transverse rods (14, 16).

8. Suspension according to claim 6 or claim 7, further comprising a plate (40) for support of the lower portion of the spring (18), the plate (40) being made as a stamped piece of metal.

9. Suspension according to claim 8, wherein the spring plate (40) is securely connected by welding both to the wheel-side arm portion (22) and to the body-side arm portion (26).

10. Suspension according to claim 8 or claim 9, wherein the suspension comprises an arm (12) according to claim 1 and wherein the spring plate (40) is made as a stamped piece of steel.

11. Suspension according to claim 8 or claim 9, wherein the suspension comprises an arm (12) according to claim 2 and wherein the spring plate (40) is made as a stamped piece of aluminium.

## Patentansprüche

1. Lenker (12) für eine unabhängige Hinterradaufhängung für ein Kraftfahrzeug (10), wobei der Lenker einen radseitigen Abschnitt (22) zum Tragen eines Rads und einen karosserieseitigen Abschnitt (26) für die Verbindung mit der Fahrzeugkarosserie umfasst, wobei der radseitige Abschnitt (22) durch ein einzelnes Gussmetallteil gebildet wird, wobei der karosserieseitige Abschnitt (26) durch mindestens ein gestanztes oder stranggepresstes Metallteil gebildet wird und wobei der radseitige Abschnitt (22) und der karosserieseitige Abschnitt (26) durch Verschweißung fest miteinander verbunden sind,
**dadurch gekennzeichnet, dass** der radseitige Lenkerabschnitt (22) aus Gusseisen hergestellt ist und dass der karosserieseitige Lenkerabschnitt (26) als ein Stahlrohrteil hergestellt ist.

2. Lenker (12) für eine unabhängige Hinterradaufhängung für ein Kraftfahrzeug (10), wobei der Lenker einen radseitigen Abschnitt (22) zum Tragen eines Rads und einen karosserieseitigen Abschnitt (26) für die Verbindung mit der Fahrzeugkarosserie umfasst, wobei der radseitige Abschnitt (22) durch ein einzelnes Gussmetallteil gebildet wird, wobei der karosserieseitige Abschnitt (26) durch mindestens ein gestanztes oder stranggepresstes Metallteil gebildet wird und wobei der radseitige Abschnitt (22) und der karosserieseitige Abschnitt (26) durch Verschweißung fest miteinander verbunden sind,
**dadurch gekennzeichnet, dass** der radseitige Lenkerabschnitt (22) aus Gussaluminium hergestellt ist und dass der karosserieseitige Lenkerabschnitt (26) als ein stranggepresstes Aluminiumteil hergestellt ist.

3. Lenker nach Anspruch 1 oder Anspruch 2, wobei der radseitige Abschnitt (22) mit einem radtragenden Zapfen (24) versehen ist und wobei der karosserieseitige Abschnitt (26) mit einem Buchsensitz (28) für eine Gelenkverbindung des Lenkers (12) mit der Fahrzeugkarosserie versehen ist.

4. Lenker nach einem der vorhergehenden Ansprüche, wobei der radseitige Abschnitt (22) einstückig mindestens einen kleinen Lenker (30, 32) ausformt, der an seinem freien Ende mit einem jeweiligen Buchsensitz (34) für eine Gelenkverbindung des radseitigen Abschnitts (22) mit mindestens einem weiteren Verbindungselement der Aufhängung versehen ist.

5. Lenker nach einem der vorhergehenden Ansprüche, wobei der radseitige Abschnitt (22) einstückig mindestens eine Tragehalterung (44) zum Tragen eines Bremssattels (46) bildet.

6. Unabhängige Hinterradaufhängung für ein Kraftfahrzeug (10), die einen Lenker (12) nach einem der vorhergehenden Ansprüche umfasst, wobei mindestens ein weiteres Verbindungselement (14, 16) einerseits mit dem radseitigen Abschnitt (22) des Lenkers (12) und andererseits mit der Fahrzeugkarosserie sowie einer Feder (18) und einem Stoßdämpfer (20) gelenkartig verbunden ist.

7. Aufhängung nach Anspruch 6, wobei der Lenker (12) ein Längslenker ist und wobei die Aufhängung ferner als das mindestens eine weitere Verbindungselement ein Paar von Querstangen (14, 16) umfasst.

8. Aufhängung nach Anspruch 6 oder Anspruch 7, die ferner eine Platte (40) zum Tragen des unteren Abschnitts der Feder (18) umfasst, wobei die Platte (40) als ein gestanztes Metallteil hergestellt ist.

9. Aufhängung nach Anspruch 8, wobei die Federplatte (40) durch Verschweißung sowohl mit dem radseitigen Lenkerabschnitt (22) als auch dem karosserieseitigen Lenkerabschnitt (26) fest verbunden ist.

10. Aufhängung nach Anspruch 8 oder Anspruch 9, wobei die Aufhängung einen Lenker (12) nach Anspruch 1 umfasst und wobei die Federplatte (40) als ein gestanztes Stahlteil hergestellt ist.

11. Aufhängung nach Anspruch 8 oder Anspruch 9, wobei die Aufhängung einen Lenker (12) nach Anspruch 2 umfasst und wobei die Federplatte (40) als ein gestanztes Aluminiumteil hergestellt ist.

## Revendications

1. Bras (12) pour une suspension arrière indépendante pour un véhicule motorisé (10), le bras comportant une partie côté roue (22) destinée à supporter une roue et une partie côté carrosserie (26) destinée à être reliée à la carrosserie de véhicule, la partie côté roue (22) étant formée par une seule pièce métallique coulée, la partie côté carrosserie (26) étant formée par au moins une pièce métallique emboutie ou extrudée, et la partie côté roue (22) et la partie côté carrosserie (26) étant reliées solidement l'une à l'autre par soudage,
**caractérisé en ce que** la partie de bras côté roue (22) est constituée de fonte et **en ce que** la partie de bras côté carrosserie (26) est réalisée sous la forme d'une pièce tubulaire en acier.

2. Bras (12) pour une suspension arrière indépendante pour un véhicule motorisé (10), le bras comportant une partie côté roue (22) destinée à supporter une roue et une partie côté carrosserie (26) destinée à être reliée à la carrosserie de véhicule, la partie côté roue (22) étant formée par une seule pièce métallique coulée, la partie côté carrosserie (26) étant formée par au moins une pièce métallique emboutie ou extrudée, et la partie côté roue (22) et la partie côté carrosserie (26) étant reliées solidement l'une à l'autre par soudage,
**caractérisé en ce que** la partie de bras côté roue (22) est constituée d'aluminium coulé et **en ce que** la partie de bras côté carrosserie (26) est réalisée sous forme de pièce d'aluminium extrudée.

3. Bras selon la revendication 1 ou la revendication 2, dans lequel la partie côté roue (22) est pourvue d'une fusée porte-roue (24), et dans lequel la partie côté carrosserie (26) est pourvue d'un logement de douille (28) pour une liaison articulée du bras (12) à la carrosserie de véhicule.

4. Bras selon l'une quelconque des revendications précédentes, dans lequel la partie côté roue (22) forme d'un seul tenant au moins un petit bras (30, 32) pourvu à son extrémité libre d'un logement de douille (34) respectif pour une liaison articulée de la partie côté roue (22) à au moins un organe de liaison supplémentaire de la suspension.

5. Bras selon l'une quelconque des revendications précédentes, dans lequel la partie côté roue (22) forme d'un seul tenant au moins une console de support (44) destinée à supporter un étrier de frein (46).

6. Suspension arrière indépendante pour un véhicule motorisé (10), comprenant un bras (12) selon l'une quelconque des revendications précédentes, au moins un organe de liaison (14, 16) supplémentaire articulé d'une part sur la partie côté roue (22) du bras (12) et d'autre part sur la carrosserie de véhicule, ainsi qu'un ressort (18) et un amortisseur (20).

7. Suspension selon la revendication 6, le bras (12) étant un bras longitudinal et la suspension comprenant en outre, en tant qu'au moins un organe de liaison supplémentaire, une paire de barres transversales (14, 16).

8. Suspension selon la revendication 6 ou la revendication 7, comprenant en outre une plaque (40) destinée à supporter la partie inférieure du ressort (18), la plaque (40) étant réalisée sous forme de pièce métallique emboutie.

9. Suspension selon la revendication 8, dans laquelle la plaque de ressort (40) est reliée solidement par soudage à la fois à la partie de bras côté roue (22) et à la partie de bras côté carrosserie (26).

10. Suspension selon la revendication 8 ou la revendication 9, la suspension comprenant un bras (12) selon la revendication 1 et la plaque de ressort (40) étant réalisée sous forme de pièce en acier emboutie.

11. Suspension selon la revendication 8 ou la revendication 9, la suspension comprenant un bras (12) selon la revendication 2 et la plaque de ressort (40) étant réalisée sous forme de pièce en aluminium emboutie.
